# EUROPÄISCHE PATENTSCHRIFT

(11) **EP 2 855 858 B1**
(45) Veröffentlichungstag und Bekanntmachung des Hinweises auf die Patenterteilung: **19.12.2018**
(21) Anmeldenummer: 13724305.1
(22) Anmeldetag: 24.05.2013
(51) Int. Cl.: F01D 25/16, F01D 25/18

(54) **ABGASTURBOLADER MIT SCHWIMMBUCHSENLAGER**
TURBOCHARGER COMPRISING A FLOATING BUSH BEARING
TURBOCOMPRESSEUR À GAZ D'ÉCHAPPEMENT À PALIER À COUSSINET FLOTTANT

(30) Priorität: 29.05.2012 DE 102012208966
(43) Veröffentlichungstag der Anmeldung: 08.04.2015
(73) Patentinhaber: Continental Automotive GmbH, 30165 Hannover (DE)
(72) Erfinder: BÖNING, Ralf, 67829 Reiffelbach (DE); KÖMPEL, Ralph-Maurice, 68159 Mannheim (DE); SCHMIDT, Christian, 64367 Mühltal (DE); KROTTENTHALER, Jürgen, 93482 Pemfling (DE); REUTER, Stefan, 93055 Regensburg (DE)
(86) Internationale Anmeldenummer: PCT/EP2013/060804
(87) Internationale Veröffentlichungsnummer: WO 2013/178557

(56) Entgegenhaltungen:
- EP-A1- 1 550 812
- EP-A2- 2 085 578
- DE-A1-102007 036 913
- JP-A- 2002 213 450
- JP-A- 2008 111 502
- US-A- 3 680 932
- US-A- 4 427 309

## Beschreibung

Die Erfindung betrifft einen Abgasturbolader, welcher eine Abgasturbine und einen Frischluftverdichter sowie einen Turborotor mit auf einer Rotorwelle befestigtem Turbinenrad und Verdichterrad aufweist, wobei die Rotorwelle mit einem Schwimmbuchsenlager in einer Lageraufnahme drehbar gelagert ist.

Abgasturbolader werden vermehrt zur Leistungssteigerung bei Kraftfahrzeug-Verbrennungsmotoren eingesetzt. Dies geschieht immer häufiger mit dem Ziel den Verbrennungsmotor bei gleicher oder gar gesteigerter Leistung in Baugröße und Gewicht zu reduzieren und gleichzeitig den Verbrauch und somit den CO₂-Ausstoß, im Hinblick auf immer strenger werdende gesetzliche Vorgaben diesbezüglich, zu verringern. Das Wirkprinzip besteht darin, die im Abgasstrom enthaltene Energie zu nutzen um den Druck im Ansaugtrakt des Verbrennungsmotors zu erhöhen und so eine bessere Befüllung des Brennraumes mit Luft-Sauerstoff zu bewirken und somit mehr Treibstoff, Benzin oder Diesel, pro Verbrennungsvorgang umsetzen zu können, also die Leistung des Verbrennungsmotors zu erhöhen.

Ein Abgasturbolader weist dazu eine im Abgasstrang des Verbrennungsmotors angeordnete Abgasturbine mit einem durch den Abgasstrom angetriebenen, in einem Turbinengehäuse angeordneten Turbinenrad und einen im Ansaugtrakt angeordneten Frischluftverdichter mit einem den Druck aufbauenden, in einem Verdichtergehäuse angeordneten Verdichterrad auf. Turbinenrad und Verdichterrad sind drehfest an den gegenüberliegenden Enden einer Rotorwelle befestigt und bilden so die hier als Turborotor bezeichnete Läufereinheit des Abgasturboladers. Die Rotorwelle ist in einer zwischen Abgasturbine und Frischluftverdichter angeordneten Lagereinheit drehgelagert. Somit wird mit Hilfe des Abgasmassenstroms das Turbinenrad und über die Rotorwelle wiederum das Verdichterrad angetrieben und die Abgasenergie so zum Druckaufbau im Ansaugtrakt genutzt.

Das Turbinenrad befindet sich im Betrieb im heißen Abgasstrom und ist somit sehr großen Temperaturschwankungen ausgesetzt wobei Spitzentemperaturen bis über 1000°C erreicht werden. Gleichzeitig rotiert der Turbinenläufer mit sehr hohen Drehzahlen von bis zu 300.000 U/min wodurch Turbinenrad, Verdichterrad und insbesondere die Lageranordnung der Rotorwelle sehr hohen mechanischen und thermischen Beanspruchungen ausgesetzt sind.

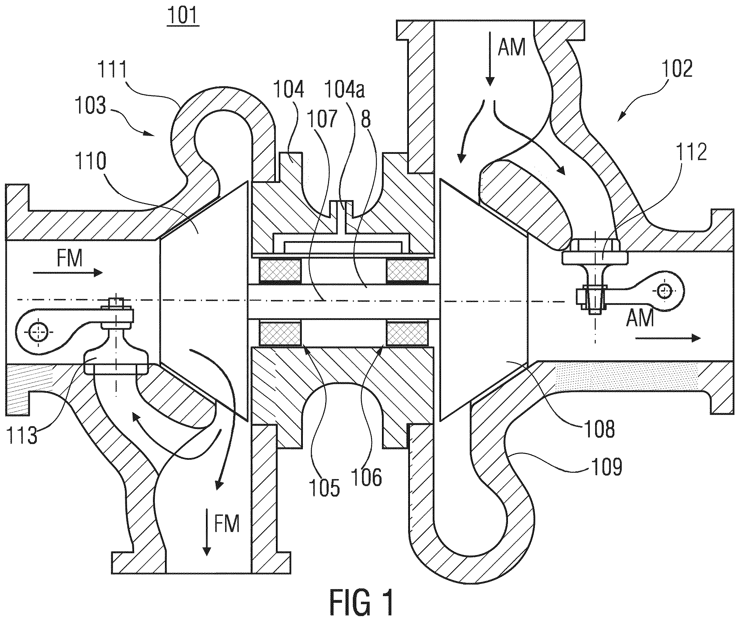

Zur Aufnahme der Lagereinheit wird in der Regel ein Lagergehäuse zwischen der Abgasturbine und dem Frischluftverdichter angeordnet, das sowohl als separate Einheit als auch als Einheit mit dem Turbinengehäuse und/oder dem Verdichtergehäuse ausgebildet sein kann. Im Lagergehäuse befinden sich eine oder mehrere Lageraufnahmen, in denen die erforderlichen Lager angeordnet sind. Zur Lagerung der Rotorwelle haben sich unter den oben genannten Bedingungen als Radiallager sogenannte Schwimmbuchsenlager vielfach bewährt. Ein Beispiel für die Anordnung solcher Radiallager innerhalb eines Lagergehäuses eines Abgasturboladers ist in Figur 1 dargestellt, die einen Gesamtaufbau eines herkömmlichen Abgasturboladers in vereinfachter Darstellung zeigt.

Figur 1 zeigt in vereinfachter Schnittdarstellung den prinzipiellen Aufbau eines bekannten Abgasturboladers 101 im Wesentlichen bestehend aus einer Abgasturbine 102 einem Frischluftverdichter 103 sowie einem dazwischen angeordneten Lagergehäuse 104. In einer Lageraufnahme des Lagergehäuses 104 sind zwei Radiallager 105/106 angeordnet in denen die Rotorwelle 8 drehbar um die Rotorachse 107 gelagert ist. Auf der Rotorwelle 8 ist einerseits das Turbinenrad 108, das in dem Turbinengehäuse 109 angeordnet ist, und andererseits das Verdichterrad 110, das in dem Verdichtergehäuse 111 angeordnet ist, drehfest angebracht. Das Lagergehäuse 104 weist einen Ölkanal 104a auf durch den den Radiallagern (105/106) Öl zur Schmierung zugeführt werden kann. Die Abgasturbine 102 weist eine Wastegate-Einrichtung 112 auf und der Frischluftverdichter 103 weist eine Schub-Umluft-Einrichtung 113 auf. Der Abgasmassenstrom AM und der Frischluftmassenstrom FM sind jeweils mit Pfeilen angedeutet.

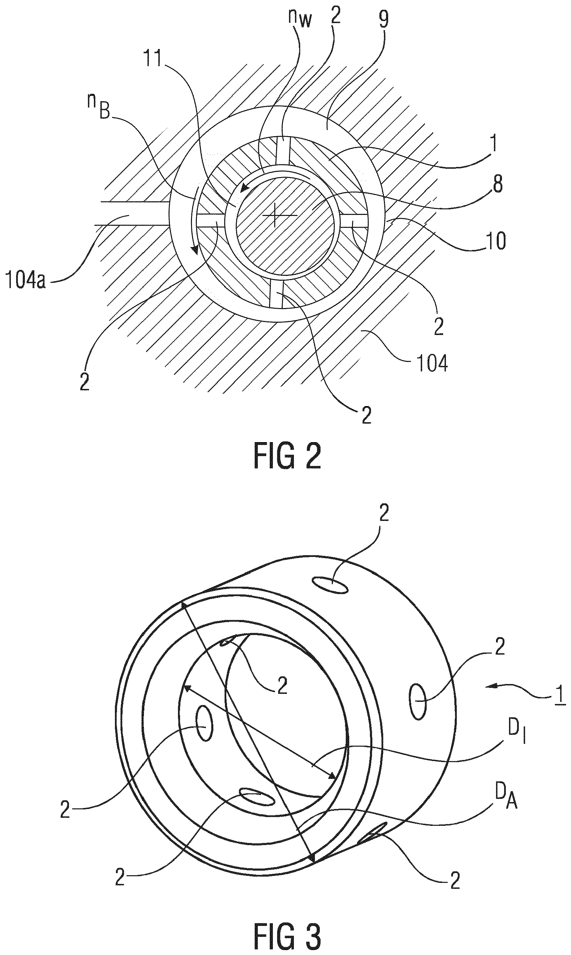

Aufbau und Funktionsweise eines Schwimmbuchsenlagers ist anhand der Darstellung in Figur 2 verdeutlicht. Figur 2 zeigt eine maßlich überzeichnete Querschnittsdarstellung eines derartigen Schwimmbuchsenlagers. Dort ist zwischen einer rotierenden Rotorwelle 8, die sich mit einer Drehzahl n_{W} dreht, und einer Lageraufnahme 10 des Lagergehäuses 104 ein ebenfalls rotierender Schwimmbuchsenkörper 1, der sich mit einer Drehzahl n_{B} dreht, vorgesehen. Zwischen der Lageraufnahme 10 und dem Schwimmbuchsenkörper 1 ist ein mit Schmieröl gefüllter äußerer Schmierspalt 9 vorgesehen. Zwischen dem Schwimmbuchsenkörper 1 und der Rotorwelle 8 ist ein ebenfalls mit Schmieröl gefüllter innerer Schmierspalt 11 ausgebildet. Dem äußeren Schmierspalt 9 wird das Schmieröl durch einen im Gehäuse 10 vorgesehenen Ölkanal 104a zugeführt. Des Weiteren sind im Schwimmbuchsenkörper 1 Durchgangsbohrungen 2 vorgesehen, durch welche der innere Schmierspalt 11 aus dem äußeren Schmierspalt 9 mit Schmieröl versorgt wird. Auf diesen Schmierölfilmen gleitet die Rotorwelle 10 auf dem Innendurchmesser des Schwimmbuchsenkörpers 1 und der Schwimmbuchsenkörper 1 auf dem Innendurchmesser der Lageraufnahme 10 des Gehäuses 104. Die Schmierölfilme müssen dabei unter Anderem die im Betrieb auftretenden Radialkräfte aufnehmen.

Ein Schwimmbuchsenlager hat gegenüber einem stehenden Gleitlager neben vielen Vorteilen den Nachteil, dass im Betrieb dann, wenn sich die Rotorwelle mit einer hohen Drehgeschwindigkeit n_{W} dreht, selbst geringe Unwuchten des Turborotors Instabilitäten des Schwimmbuchsenlagers zur Folge haben können, die sich verkürzend auf die Lebensdauer auswirken und im ungünstigen Fall gar bis zu einer kompletten Zerstörung des Schwimmbuchsenlagers führen können.

Um derartige Instabilitäten des Schwimmbuchsenlagers zu reduzieren und somit die Lebensdauer des Abgasturboladers zu verlängern, wird in der Praxis versucht, diesem Problem durch eine möglichst gute Auswuchtung des Turborotors im gesamten Drehgeschwindigkeitsbereich zu begegnen. Diese Versuche haben jedoch insbesondere für den Bereich gesteigerter Drehgeschwindigkeiten der Turborotoren, wie diese insbesondere bei Abgasturboladern neuerer Konzeption auftreten, noch nicht zum gewünschten Erfolg bei vertretbarem Aufwand geführt.

Aus dem Stand der Technik gemäß Dokument DE 10 2007 036 913 A1 ist ein Turbolader für eine Brennkraftmaschine bekannt, der eine Turbine, einen Verdichter und eine Welle, auf der der Turbinenrotor und der Verdichterrotor drehfest montiert sind aufweist. Die Welle ist mittels einer Lagereinheit in einem Lagergehäuse gelagert, wobei die Lagereinheit wenigstens eine Lagerbuchse aufweist, die die Welle umgibt. Dabei ist die Lagerbuchse im Lagergehäuse gelagert und mit Bohrungen versehen, die derart angeordnet sind, dass während des Betriebes des Turboladers eine Unwucht entsteht.

Weiterhin offenbart Dokument EP 1 550 812 A1 eine Strömungsmaschine mit einer Turbine und einem Kompressor, wobei Turbinenrad und Kompressorrad mittels einer Welle in einem Lagergehäuse gelagert ist. Innerhalb des Lagergehäuses ist am Wellenlager eine Schallunterdrückungsanordnung vorgesehen, die auf einer unsymmetrischen Anordnung und/oder Ausführung der zur Lagerschmierung vorgesehenen Schmierbohrungen beruht.

Aus der Patentschrift US 3,680,932 A1 ist ein Gleitlager-Anordnung zur Lagerung einer rotierenden Welle bekannt, wobei die Lagerbuchse auf ihrem Innenumfang zumindest drei Unrundheiten mit je einer axial verlaufenden Nut und einem sich daran anschließenden in Umfangsrichtung bogenförmig auslaufenden Rücksprung aufweist.

Ausgehend von dem genannten Stand der Technik besteht die Aufgabe der Erfindung darin, einen Abgasturbolader mit Schwimmbuchsenlager für einen Turborotor anzugeben, bei welchem im gesamten zu erwartenden Drehgeschwindigkeitsbereich der Rotorwelle ein Auftreten von Instabilitäten des Schwimmbuchsenlagers beseitigt oder zumindest reduziert und somit die Betriebssicherheit sowie die Lebensdauer des Abgasturboladers erhöht ist.

Diese Aufgabe wird durch einen Abgasturbolader mit den Merkmalen gemäß Anspruch 1 gelöst. Vorteilhafte Ausgestaltungen der Erfindung sind in den abhängigen Ansprüchen angegeben.

Gemäß der vorliegenden Erfindung wird ein Abgasturbolader vorgeschlagen, der eine Abgasturbine mit einem Turbinenrad, einen Frischluftverdichter mit einem Verdichterrad und eine Lageraufnahme aufweist, wobei das Turbinenrad und das Verdichterrad auf einer gemeinsamen Rotorwelle angeordnet sind und so einen Turborotor bilden. Die Rotorwelle ist in der Lageraufnahme mittels zumindest einem als Schwimmbuchsenlager ausgebildeten Radiallager drehbar gelagert. Dabei weist das zumindest eine Radiallager einen Schwimmbuchsenkörper auf, der nach Art eines Hohlzylinders mit einem Innendurchmesser, der die Rotorwelle aufnimmt, und einem Außendurchmesser, zur Aufnahme des Schwimmbuchsenkörpers in der Lageraufnahme, ausgebildet ist. Zwischen der Rotorwelle und dem Innendurchmesser des Schwimmbuchsenkörpers ist ein innerer Schmierspalt und zwischen der Lageraufnahme und dem Außendurchmesser des Schwimmbuchsenkörpers ein äußerer Schmierspalt ausgebildet. Der Schwimmbuchsenkörper ist mit einer definierten Unwucht in Bezug auf seine Drehachse ausgestattet, die einer Unwucht des Turborotors im Betrieb stabilisierend entgegenwirkt, wobei die definierte Unwucht, als Exzentrizität in Relation zum Lagerspiel des inneren Schmierspalts angegeben, in einem Bereich zwischen 20% bis 30% des durch den inneren Schmierspalt ausgebildeten Lagerspiels liegt.

Dabei errechnet sich das Lagerspiel als die doppelte Spaltbreite des inneren Schmierspalts bei konzentrischer Anordnung der Welle im Schwimmbuchsenkörper. In einem konkreten Ausführungsbeispiel besteht ein umlaufender innerer Schmierspalt von 0,011 mm somit beträgt das Lagerspiel 0,022 mm.

Die Unwucht des Schwimmbuchsenkörpers bezieht sich dabei auf die Drehachse des Schwimmbuchsenkörpers, die mit der auf den Außendurchmesser bezogen zentrisch angeordneten Längsachse des Schwimmbuchsenkörpers identisch ist, wobei diese, bei konzentrischer Anordnung des Innendurchmessers und gleichmäßiger Ausbildung des inneren Schmierspalts über den Umfang, mit der Drehachse der Welle übereinstimmt. Die definierte Unwucht wird dabei sowohl in ihrer Lage bezogen auf den Schwimmbuchsenkörper als auch im Betrag vorab festgelegt. Die Ermittlung des erforderlichen Betrags sowie der vorteilhaften Lage der Unwucht kann vorab auf rechnerischem Weg, per Computer-Simulation oder auch in entsprechenden Versuchsreihen erfolgen.

Die Ursache einer Unwucht liegt in einer ungleichmäßigen Massenverteilung des Drehkörpers, hier des Schwimmbuchsenkörpers, über seinen Umfang bezogen auf seine konstruktiv vorgegebene Drehachse. Durch die ungleichmäßige Massenverteilung ergibt sich eine Lageabweichung der Trägheitsachse des Drehkörpers in Bezug zu seiner vorgegebenen Drehachse. Diese Lageabweichung kann als Maß für die Größe, also den Betrag der Unwucht herangezogen werden und wird auch als Exzentrizität bezeichnet. Die Exzentrizität gibt dabei die betragsmäßige Lageabweichung der Trägheitsachse eines Drehkörpers zu seiner Drehachse an, zum Beispiel in Millimeter (mm).

In einer weiteren vorteilhaften Ausführung des erfindungsgemäßen Abgasturboladers ist der Schwimmbuchsenkörper dadurch gekennzeichnet, dass die definierte Unwucht, als Exzentrizität angegeben, 0,005 mm beträgt.

Die in den beiden vorgenannten Beispielen der Dimensionierung der Unwucht genannten Bereiche haben sich in Versuchen mit Rotorwellen eines Durchmesserbereichs zwischen 8 mm bis 25 mm als besonders vorteilhaft erwiesen, da die definierte Unwucht des Schwimmbuchsenkörpers zum Einen klein genug ist, um sich nicht ihrerseits negativ auf den Rundlauf des Gesamtsystems auszuwirken, zum Anderen jedoch groß genug ist, um der Unwucht der Welle im gesamten Drehgeschwindigkeitsbereich, insbesondere auch im Bereich hoher Drehgeschwindigkeiten bis hin zu 250.000 Umdrehungen/Minute und darüber hinaus, entgegen zu wirken.

Für die Ausgestaltung der definierten Unwucht des Schwimmbuchsenkörpers bestehen verschiedene Möglichkeiten. So kann die Unwucht von einer, zwei oder mehr in den Schwimmbuchsenkörper eingebrachten Stufenbohrungen gebildet sein. Alternativ dazu kann die definierte Unwucht auch von einer oder mehreren in den Schwimmbuchsenkörper eingebrachten Durchgangsbohrungen oder Sacklochbohrungen, einer in den Schwimmbuchsenkörper eingebrachten Innennut oder durch eine Verformung des Außenmantels des Schwimmbuchsenkörpers gebildet sein. Auch durch eine exzentrische Anordnung des Innendurchmessers des Schwimmbuchsenkörpers in Bezug auf den Außendurchmesser des Schwimmbuchsenkörpers kann die definierte Unwucht ausgebildet sein.
Die vorgenannten Möglichkeiten zur Herstellung einer definierten Unwucht können, je nach Erfordernis, sowohl alternativ als auch in Kombination zur Anwendung kommen.

Die in den Schwimmbuchsenkörper eingebrachte definierte Unwucht wirkt im Betrieb des Abgasturboladers einer Unwucht des Turborotors entgegen. Dadurch werden auch im Bereich hoher Drehgeschwindigkeiten der Rotorwelle gegebenenfalls auftretende Instabilitäten des Schwimmbuchsenlagers vermieden oder zumindest stark reduziert. Dies führt in vorteilhafter Weise dazu, dass auch die Wahrscheinlichkeit einer Zerstörung des Schwimmbuchsenlagers reduziert und somit im Umkehrschluß die Betriebssicherheit und Lebensdauer des Abgasturboladers erhöht ist.

Nachfolgend werden Ausführungsbeispiele für die Erfindung anhand der Figuren 2 - 7 erläutert. Es zeigt
- Fig. 1: eine vereinfachte Schnittdarstellung eines Abgasturboladers in Seitenansicht mit zwei Radiallagern zur Lagerung der Rotrowelle
- Figur 2: eine vereinfachte, maßlich stark überzeichnete Querschnittsdarstellung eines Schwimmbuchsenlagers gemäß dem Stand der Technik,
- Figur 3: eine perspektivische Skizze eines herkömmlichen Schwimmbuchsenkörpers,
- Figur 4: eine Schnittdarstellung eines Schwimmbuchsenkörpers, dessen Unwucht durch eine Stufenbohrung ausgebildet ist,
- Figur 5: eine Schnittdarstellung eines Schwimmbuchsenkörpers, dessen Unwucht durch eine Sacklochbohrung ausgebildet ist,
- Figur 6: eine Schnittdarstellung eines Schwimmbuchsenkörpers, dessen Unwucht durch eine Durchgangsbohrung ausgebildet ist,
- Figur 7: eine Schnittdarstellung eines Schwimmbuchsenkörpers, dessen Unwucht durch eine Innennut ausgebildet ist und
- Figur 8: eine perspektivische Skizze eines Schwimmbuchsenkörpers, dessen Unwucht durch eine Verformung des Außenmantels des Schwimmbuchsenkörpers ausgebildet ist.
- Figur 9: eine Frontalansicht eines Schwimmbuchsenkörpers in Schnittdarstellung, dessen Unwucht durch die exzentrische Anordnung des Außendurchmessers des Schwimmbuchsenkörpers zum Innendurchmesser des Schwimmbuchsenkörpers ausgebildet ist.

Funktions- und Benennungsgleiche Gegenstände oder Funktionseinheiten werden in den Figuren durchgängig mit den gleichen Bezugszeichen gekennzeichnet.

In der Figur 3 ist eine perspektivische Skizze eines herkömmlichen Schwimmbuchsenkörpers 1 gezeigt. Dieser Schwimmbuchsenkörper 1 ist im Wesentlichen hohlzylinderförmig oder rohrförmig mit einem Außendurchmesser D_{A} und einem Innendurchmesser D_{I} ausgebildet und weist über seinen Umfang gleichmäßig verteilt mehrere Ölzuführbohrungen 2 auf, durch welche im Betrieb Schmieröl von der Außenseite zur Innenseite, also vom äußeren Schmierspalt zum inneren Schmierspalt, transportiert wird. Diese Ölzuführbohrungen 2 verlaufen in der Regel jeweils in Radialrichtung, weisen jeweils einen vorgegebenen Durchmesser auf und sind als Durchgangsbohrungen realisiert. Der in der Figur 2 dargestellte Schwimmbuchsenkörper 1 ist symmetrisch aufgebaut und weist somit keine gewollte Unwucht auf.

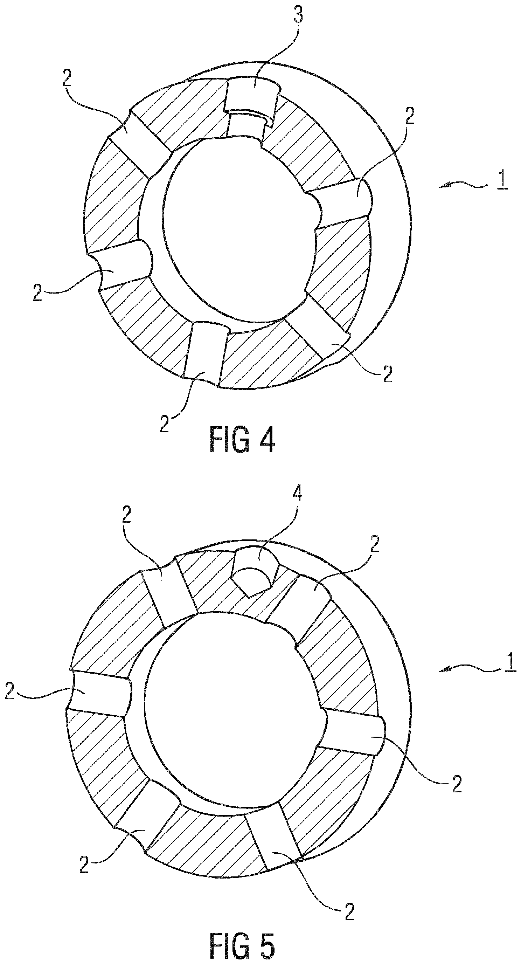

Die Figur 4 zeigt eine Schnittdarstellung eines Schwimmbuchsenkörpers 1, dessen Unwucht durch eine in den Schwimmbuchsenkörper 1 eingebrachte Stufenbohrung gebildet ist. Auch dieser Schwimmbuchsenkörper 1 ist im Wesentlichen hohlzylinderförmig oder rohrförmig ausgebildet. Er weist insgesamt sechs Ölzuführungsbohrungen 2 auf, von denen 5 mit der Bezugsziffer 2 bezeichnet sind und eine mit der Bezugsziffer 3. Diese Ölzuführungsbohrung 3 dient gleichzeitig zur Erzeugung der Unwucht des Schwimmbuchsenkörpers. Sie ist zu diesem Zweck stufenförmig ausgebildet, wobei sie in ihrem radial äußeren Bereich einen Durchmesser aufweist, der größer ist als der Durchmesser derselben Bohrung in ihrem radial inneren Bereich. Der Durchmesser der Bohrung 3 in ihrem radial inneren Bereich stimmt mit dem Durchmesser der Bohrungen 2 jeweils überein. Der Durchmesser der Bohrung 3 in ihrem radial äußeren Bereich ist größer als der Durchmesser der Bohrung 3 in ihrem radial inneren Bereich und damit auch größer als der Durchmesser der Bohrungen 2. Dies bewirkt eine gezielt ungleichmäßige Massenverteilung des Schwimmbuchsenkörpers über den Umfang und somit eine in Betrag und Lage definierte Unwucht.

Die in Form einer Stufenbohrung 3 realisierte Unwucht des Schwimmbuchsenkörpers wirkt im Betrieb des Radiallagers im gesamten Drehgeschwindigkeitsbereich der Welle, insbesondere auch im Bereich hoher Drehgeschwindigkeiten, einer Unwucht der Welle entgegen, so dass Instabilitäten des Radiallagers und die Wahrscheinlichkeit einer Zerstörung des Lagers reduziert sind.

Die Figur 5 zeigt eine Schnittdarstellung eines Schwimmbuchsenkörpers, dessen Unwucht durch zumindest eine in den Außenumfang des Schwimmbuchsenkörpers eingebrachte Sacklochbohrung 4 ausgebildet ist. Auch dieser Schwimmbuchsenkörper 1 ist im Wesentlichen hohlzylinderförmig oder rohrförmig ausgebildet. Er weist insgesamt sechs gleichmäßig über den Umfang verteilt eingebrachte Ölzuführungsbohrungen 2 auf. Die Sacklochbohrung 4 dient zur Erzeugung der Unwucht des Schwimmbuchsenkörpers. Die Sacklochbohrung 4 kann prinzipiell den gleichen Durchmesser aufweisen wie die Ölzuführungsbohrungen 2, was die Herstellung im gleichen Arbeitsgang mit dem gleichen Werkzeug ermöglicht. Jedoch kann die Sacklochbohrung 4 auch einen zu den Ölzuführungsbohrungen 2 unterschiedlichen Durchmesser aufweisen sofern dies für einen ausreichenden Materialabtrag zur Definition der Unwucht erforderlich ist. Auch dies bewirkt eine gezielt ungleichmäßige Massenverteilung des Schwimmbuchsenkörpers über den Umfang und somit eine in Betrag und Lage definierte Unwucht.

Die in Form einer Sacklochbohrung 4 realisierte Unwucht des Schwimmbuchsenkörpers wirkt im Betrieb des Radiallagers im gesamten Drehgeschwindigkeitsbereich der Welle, insbesondere auch im Bereich hoher Drehgeschwindigkeiten, einer Unwucht der Welle entgegen, so dass Instabilitäten des Radiallagers und die Wahrscheinlichkeit einer Zerstörung des Lagers reduziert sind.

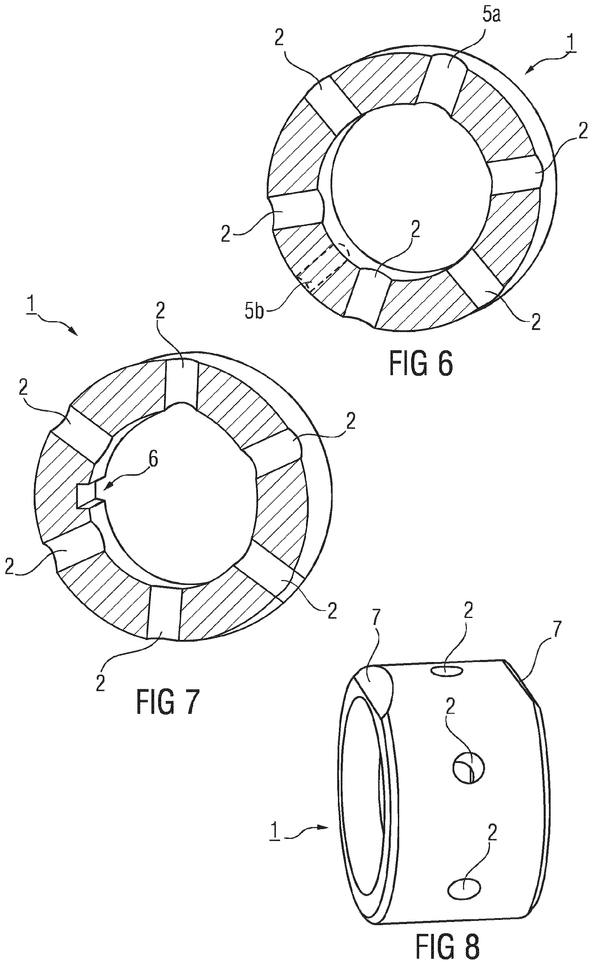

Die Figur 6 zeigt eine Schnittdarstellung eines Schwimmbuchsenkörpers, dessen Unwucht durch eine in den Schwimmbuchsenkörper eingebrachte Durchgangsbohrung gebildet ist. Auch dieser Schwimmbuchsenkörper 1 ist im Wesentlichen hohlzylinderförmig oder rohrförmig ausgebildet. Er weist insgesamt sechs gleichmäßig über den Umfang verteilt eingebrachte Ölzuführungsbohrungen auf, von denen 5 mit der Bezugsziffer 2 bezeichnet sind und eine mit der Bezugsziffer 5a. Diese Ölzuführungsbohrung 5a dient gleichzeitig zur Erzeugung der Unwucht des Schwimmbuchsenkörpers. Sie ist zu diesem Zweck als Durchgangsbohrung ausgebildet, deren Durchmesser konstant und durchgehend größer ist als der Durchmesser der übrigen Bohrungen 2. Ein entsprechendes Ergebnis kann alternativ auch erzielt werden durch die Anordnung einer zusätzlichen Durchgangsbohrung 5b (gestrichelt dargestellt) zwischen den gleichverteilten Ölzuführungsbohrungen 2. Auch diese beiden Alternativen bewirken eine gezielt ungleichmäßige Massenverteilung des Schwimmbuchsenkörpers über den Umfang und somit eine in Betrag und Lage definierte Unwucht.

Die in Form einer Durchgangsbohrung 5a/5b realisierte Unwucht des Schwimmbuchsenkörpers wirkt im Betrieb des Radiallagers im gesamten Drehgeschwindigkeitsbereich der Welle, insbesondere auch im Bereich hoher Drehgeschwindigkeiten, einer Unwucht der Welle entgegen, so dass Instabilitäten des Radiallagers und die Wahrscheinlichkeit einer Zerstörung des Lagers reduziert sind.

Die Figur 7 zeigt eine Schnittdarstellung eines Schwimmbuchsenkörpers 1, dessen Unwucht durch eine in den Schwimmbuchsenkörper 1 eingebrachte Innennut 6 gebildet ist. Auch dieser Schwimmbuchsenkörper 1 ist im Wesentlichen hohlzylinderförmig oder rohrförmig ausgebildet. Er weist insgesamt sechs gleichmäßig über den Umfang verteilt eingebrachte Ölzuführungsbohrungen auf, die mit der Bezugsziffer 2 bezeichnet sind und deren Durchmesser übereinstimmen. Weiterhin weist der Schwimmbuchsenkörper 1 auf seiner Innenseite eine gezielt dimensionierte Innennut 6 auf. Auch dies bewirkt eine gezielt ungleichmäßige Massenverteilung des Schwimmbuchsenkörpers 1 über den Umfang und somit eine in Betrag und Lage definierte Unwucht. Selbstverständlich kann ein gleiches Ergebnis erzielt werden durch die Anordnung einer entsprechenden Außennut auf dem Außenumfang des Schwimmbuchsenkörpers 1 (nicht dargestellt).

Die in Form einer Innennut 6 oder Außennut realisierte Unwucht des Schwimmbuchsenkörpers 1 wirkt im Betrieb des Radiallagers im gesamten Drehgeschwindigkeitsbereich der Welle, insbesondere auch im Bereich hoher Drehgeschwindigkeiten, einer Unwucht der Welle entgegen, so dass Instabilitäten des Radiallagers und die Wahrscheinlichkeit einer Zerstörung des Lagers reduziert sind.

Die Figur 8 zeigt eine perspektivische Skizze eines Schwimmbuchsenkörpers 1, dessen Unwucht durch eine Verformung des Außenmantels des Schwimmbuchsenkörpers 1 ausgebildet ist. Auch dieser Schwimmbuchsenkörper 1 ist im Wesentlichen hohlzylinderförmig oder rohrförmig ausgebildet. Er weist ebenfalls insgesamt sechs gleichmäßig über den Umfang verteilt eingebrachte Ölzuführungsbohrungen 2 mit übereinstimmenden Durchmessern auf. Die Verformung des Außenmantels des Schwimmbuchsenkörpers 1 kann beispielsweise durch einen Materialabtrag in Form einer oder mehrerer Anfasungen 7 oder Abflachungen realisiert werden.
Auch diese alternativ oder ergänzend zueinander anwendbaren Merkmale bewirken eine gezielt ungleichmäßige Massenverteilung des Schwimmbuchsenkörpers 1 über den Umfang und somit eine in Betrag und Lage definierte Unwucht.

Die durch eine Verformung des Außenmantels des Schwimmbuchsenkörpers 1 realisierte Unwucht des Schwimmbuchsenkörpers 1 wirkt im Betrieb des Radiallagers im gesamten Drehgeschwindigkeitsbereich der Welle, insbesondere auch im Bereich hoher Drehgeschwindigkeiten, einer Unwucht der Welle entgegen, so dass Instabilitäten des Schwimmbuchsenlagers und die Wahrscheinlichkeit einer Zerstörung des Lagers reduziert sind.

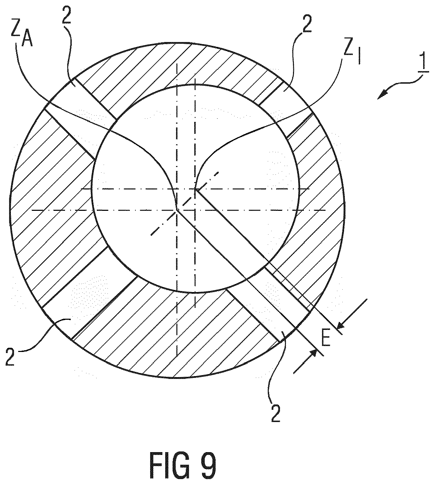

In Figur 9 ist eine Frontalansicht eines Schwimmbuchsenkörpers 1 im Schnitt dargestellt, dessen Unwucht durch die exzentrische Anordnung des Innendurchmessers des Schwimmbuchsenkörpers 1 zum Außendurchmesser des Schwimmbuchsenkörpers 1 ausgebildet ist. Aus Gründen der Erkennbarkeit ist die relative Lageabweichung E zwischen dem Zentrum Z_{I} des Innendurchmessers und dem Zentrum Z_{A} des Außendurchmessers stark überzeichnet dargestellt. Auch diese Maßnahme bewirkt eine gezielt ungleichmäßige Massenverteilung des Schwimmbuchsenkörpers 1 über den Umfang und somit eine in Betrag und Lage definierte Unwucht.
Ein mit einer definierten Unwucht ausgestatteter Schwimmbuchsenkörper 1, wie er in den Figuren 4 bis 9 gezeigt und vorausgehend beschrieben ist, ist Bestandteil eines Schwimmbuchsenlagers, welches eine Rotorwelle 8 in einem Abgasturboladergehäuse drehbar lagert, wobei der Schwimmbuchsenkörper 1 zwischen einer Lageraufnahme 10 des Abgasturboladergehäuses und der Rotorwelle 8 angeordnet ist, wobei zwischen der Rotorwelle 8 und dem Schwimmbuchsenkörper 1 ein innerer Schmierspalt und zwischen dem Schwimmbuchsenkörper und der Lageraufnahme ein äußerer Schmierspalt ausgebildet ist.

Im Betrieb des Abgasturboladers, insbesondere bei hohen Drehgeschwindigkeiten der Rotorwelle, verursacht eine Unwucht des Turborotors einen Kraftimpuls auf den Schmierfilm im inneren Schmierspalt. Dieser Kraftimpuls wird bis zu einem gewissen Grad durch das im inneren Schmierspalt befindliche Schmiermittel gedämpft. Der verbleibende Restimpuls wird über den im inneren Schmierspalt befindlichen Schmiermittelstrom auf den Schwimmbuchsenkörper übertragen und verursacht grundsätzlich eine Auslenkung des Schwimmbuchsenkörpers relativ zum Schmierfilm im äußeren Schmierspalt. Dieser Auslenkung des Schwimmbuchsenkörpers wirken die Massenträgheit des Schwimmbuchsenkörpers selbst und auch Dämpfungskräfte des Schmierfilms im äußeren Schmierspalt entgegen und bewirken eine Teilkompensation der Auslenkung des Schwimmbuchsenkörpers. Ist der Schwimmbuchsenkörper - wie es oben anhand der Figuren 4 bis 9 erläutert wurde - mit einer definierten Unwucht ausgestattet, dann wird das genannte Entgegenwirken verstärkt, so dass insbesondere auch im Bereich hoher Drehgeschwindigkeiten der Rotorwelle, die im Bereich von bis zu 120 m/s liegen, die unerwünschten Auswirkungen von Unwuchten des Turborotors weitgehend kompensiert werden.

Zur Ermittlung derjenigen Stelle oder Stellen des Schwimmbuchsenkörpers, an welcher bzw. welchen eine definierte Unwucht vorgesehen sein muss, um einer Unwucht des Turborotors entgegenwirken zu können, werden Untersuchungen im gesamten Drehgeschwindigkeitsbereich der Rotorwelle durchgeführt um zu ermitteln, welche Positionen am Schwimmbuchsenkörper mit einer Unwucht ausgestattet werden müssen, um einer Unwucht des Turborotors entgegenwirken zu können.

## Patentansprüche

1. Abgasturbolader aufweisend eine Abgasturbine (102) mit einem Turbinenrad (108), einen Frischluftverdichter (103)mit einem Verdichterrad (110) und eine Lageraufnahme (10),
- wobei das Turbinenrad (108) und das Verdichterrad (110) auf einer gemeinsamen Rotorwelle(8) angeordnet sind und so einen Turborotor bilden und die Rotorwelle 8 im Lagergehäuse (104) mittels zumindest einem als Schwimmbuchsenlager ausgebildeten Radiallager (105/106) drehbar gelagert ist und
- wobei das zumindest eine Radiallager (105/106) einen Schwimmbuchsenkörper (1) aufweist, der nach Art eines Hohlzylinders mit einem Innendurchmesser (D_{I}), der die Rotorwelle 107 aufnimmt, und einem Außendurchmesser (D_{A}), zur Aufnahme des Schwimmbuchsenkörpers (1) in einer Lageraufnahme (10), ausgebildet ist, wobei zwischen der Rotorwelle (107) und dem Innendurchmesser (D_{I}) des Schwimmbuchsenkörpers (1) ein innerer Schmierspalt (11) und zwischen der Lageraufnahme (10) und dem Außendurchmesser (D_{A}) des Schwimmbuchsenkörpers (1) ein äußerer Schmierspalt (9) ausgebildet ist und ,
wobei der Schwimmbuchsenkörper (1) mit einer definierten Unwucht (3, 4, 5, 6, 7, E) in Bezug auf seine Drehachse ausgestattet ist, die einer Unwucht des Turborotors im Betrieb stabilisierend entgegenwirkt, **dadurch gekennzeichnet, dass** die definierte Unwucht des Schwimmbuchsenkörpers (1), als Exzentrizität angegeben, in einem Bereich zwischen 20% bis 30% eines durch den inneren Schmierspalt ausgebildeten Lagerspiels liegt.

2. Abgasturbolader nach Anspruch 1, **dadurch gekennzeichnet, dass** die definierte Unwucht des Schwimmbuchsenkörpers (1), als Exzentrizität angegeben, 0,005 mm beträgt.

3. Abgasturbolader nach einem der Ansprüche 1 oder 2, **dadurch gekennzeichnet, dass** die definierte Unwucht des Schwimmbuchsenkörpers (1) von zumindest einer in den Schwimmbuchsenkörper (1) eingebrachten Stufenbohrung (3) ausgebildet ist.

4. Abgasturbolader nach einem der Ansprüche 1 oder 2, **dadurch gekennzeichnet, dass** die definierte Unwucht des Schwimmbuchsenkörpers (1) von zumindest einer in den Schwimmbuchsenkörper (1) eingebrachten Sacklochbohrung (4) ausgebildet ist.

5. Abgasturbolader nach einem der Ansprüche 1 oder 2, **dadurch gekennzeichnet, dass** die definierte Unwucht des Schwimmbuchsenkörpers (1) von einer in den Schwimmbuchsenkörper (1) eingebrachten Durchgangsbohrung (5a, 5b) ausgebildet ist.

6. Abgasturbolader nach Anspruch 5, **dadurch gekennzeichnet, dass** die Durchgangsbohrung (5a) eine Ölzuführungsbohrung ist, deren Durchmesser größer ist als der Durchmesser, den im Schwimmbuchsenkörper (1) vorgesehene weitere Ölzuführbohrungen (2) aufweisen.

7. Abgasturbolader nach Anspruch 5, **dadurch gekennzeichnet, dass** die Durchgangsbohrung eine zusätzlich zu vorgesehenen weiteren Ölzuführungsbohrungen (2) angeordnete Durchgangsbohrung (5b) ist.

8. Abgasturbolader nach einem der Ansprüche 1 oder 2, **dadurch gekennzeichnet, dass** die definierte Unwucht des Schwimmbuchsenkörpers (1) von einer in den Schwimmbuchsenkörper (1) eingebrachten Innennut (6) ausgebildet ist.

9. Abgasturbolader nach einem der Ansprüche 1 oder 2, **dadurch gekennzeichnet, dass** die definierte Unwucht des Schwimmbuchsenkörpers (1) durch eine Verformung (7) des Außenmantels des Schwimmbuchsenkörpers (1) ausgebildet ist.

10. Abgasturbolader nach Anspruch 9, **dadurch gekennzeichnet, dass** die Verformung (7) durch einen Materialabtrag am Außenmantel des Schwimmbüchsenkörpers (1) ausgebildet ist.

11. Abgasturbolader nach einem der Ansprüche 1 oder 2, **dadurch gekennzeichnet, dass** die definierte Unwucht des Schwimmbuchsenkörpers (1) durch eine exzentrische Anordnung des Innendurchmessers (D_{I}) des Schwimmbuchsenkörpers (1) in Bezug auf den Außendurchmesser (D_{A}) des Schwimmbuchsenkörpers (1) ausgebildet ist.

## Claims

1. Exhaust-gas turbocharger having an exhaust-gas turbine (102) with a turbine wheel (108), having a fresh-air compressor (103) with a compressor wheel (110), and having a bearing receptacle (10),
- wherein the turbine wheel (108) and the compressor wheel (110) are arranged on a common rotor shaft (8) and thus form a turbo rotor, and the rotor shaft 8 is rotatably mounted in the bearing housing (104) by means of at least one radial bearing (105/106) in the form of a floating-bushing bearing, and
- wherein the at least one radial bearing (105/106) has a floating bushing body (1) which is formed in the manner of a hollow cylinder with an internal diameter (D_{I}) which receives the rotor shaft (107) and with an external diameter (D_{A}) by which the floating bushing body (1) is received in a bearing receptacle (10), wherein an inner lubrication gap (11) is formed between the rotor shaft (107) and the internal diameter (D_{I}) of the floating bushing body (1) and an outer lubrication gap (9) is formed between the bearing receptacle (10) and the outer diameter (D_{A}), and
wherein the floating bushing body (1) is provided with a defined imbalance (3, 4, 5, 6, 7, E) with respect to its axis of rotation, which imbalance counteracts, in stabilizing fashion, an imbalance of the turbo rotor during operation, **characterized in that** the defined imbalance of the floating bushing body (1), expressed as an eccentricity, lies in a range between 20% to 30% of a bearing play formed by the inner lubrication gap.

2. Exhaust-gas turbocharger according to Claim 1, **characterized in that** the defined imbalance of the floating bushing body (1), expressed as an eccentricity is 0.005 mm.

3. Exhaust-gas turbocharger according to one of Claims 1 or 2, **characterized in that** the defined imbalance of the floating bushing body (1) is formed by at least one stepped bore (3) formed into the floating bushing body (1).

4. Exhaust-gas turbocharger according to one of Claims 1 or 2, **characterized in that** the defined imbalance of the floating bushing body (1) is formed by at least one blind bore (4) formed into the floating bushing body (1).

5. Exhaust-gas turbocharger according to one of Claims 1 or 2, **characterized in that** the defined imbalance of the floating bushing body (1) is formed by a passage bore (5a, 5b) formed into the floating bushing body (1).

6. Exhaust-gas turbocharger according to Claim 5, **characterized in that** the passage bore (5a) is an oil supply bore, the diameter of which is larger than the diameter of further oil supply bores (2) provided in the floating bushing body (1).

7. Exhaust-gas turbocharger according to Claim 5, **characterized in that** the passage bore is a passage bore (5b) arranged in addition to further oil supply bores (2) that are provided.

8. Exhaust-gas turbocharger according to one of Claims 1 or 2, **characterized in that** the defined imbalance of the floating bushing body (1) is formed by an internal groove (6) formed into the floating bushing body (1).

9. Exhaust-gas turbocharger according to one of Claims 1 or 2, **characterized in that** the defined imbalance of the floating bushing body (1) is formed by a deformation (7) of the outer shell of the floating bushing body (1).

10. Exhaust-gas turbocharger according to Claim 9, **characterized in that** the deformation (7) is formed by a removal of material from the outer shell of the floating bushing body (1) .

11. Exhaust-gas turbocharger according to one of Claims 1 or 2, **characterized in that** the defined imbalance of the floating bushing body (1) is formed by an eccentric arrangement of the internal diameter (D_{I}) of the floating bushing body (1) in relation to the external diameter (D_{A}) of the floating bushing body (1).

## Revendications

1. Turbocompresseur à gaz d'échappement présentant une turbine à gaz d'échappement (102) avec une roue de turbine (108), un compresseur d'air frais (103) avec une roue de compresseur (110) et un logement de palier (10),
- la roue de turbine (108) et la roue de compresseur (110) étant disposées sur un arbre de rotor commun (8) et formant ainsi un turborotor et l'arbre de rotor (8) étant supporté à rotation dans le logement de palier (104) au moyen d'au moins un palier radial (105/106) réalisé sous forme de palier à manchon flottant et
- l'au moins un palier radial (105/106) présentant un corps de manchon flottant (1) qui est réalisé à la manière d'un cylindre creux avec un diamètre intérieur (D_{I}) qui reçoit l'arbre de rotor (107), et un diamètre extérieur (D_{A}) pour recevoir le corps de manchon flottant (1) dans un logement de palier (10), une fente de lubrification interne (11) étant réalisée entre l'arbre de rotor (107) et le diamètre intérieur (D_{I}) du corps de manchon flottant (1) et une fente de lubrification externe (9) étant réalisée entre le logement de palier (10) et le diamètre extérieur (D_{A}) du corps de manchon flottant (1), et
le corps de manchon flottant (1) présentant un déséquilibre défini (3, 4, 5, 6, 7, E) par rapport à son axe de rotation, qui s'oppose à un déséquilibre du turborotor avec un effet de stabilisation pendant le fonctionnement, **caractérisé en ce que** le déséquilibre défini du corps de manchon flottant (1), présenté sous forme d'excentricité, est compris dans une plage entre 20 % et 30 % d'un jeu de palier réalisé par la fente de lubrification interne.

2. Turbocompresseur à gaz d'échappement selon la revendication 1, **caractérisé en ce que** le déséquilibre défini du corps de manchon flottant (1), présenté sous forme d'excentricité, vaut 0,005 mm.

3. Turbocompresseur à gaz d'échappement selon l'une quelconque des revendications 1 ou 2, **caractérisé en ce que** le déséquilibre défini du corps de manchon flottant (1) est fourni par au moins un alésage étagé (3) réalisé dans le corps de manchon flottant (1).

4. Turbocompresseur à gaz d'échappement selon l'une quelconque des revendications 1 ou 2, **caractérisé en ce que** le déséquilibre défini du corps de manchon flottant (1) est fourni par au moins un alésage borgne (4) réalisé dans le corps de manchon flottant (1).

5. Turbocompresseur à gaz d'échappement selon l'une quelconque des revendications 1 ou 2, **caractérisé en ce que** le déséquilibre défini du corps de manchon flottant (1) est fourni par un alésage traversant (5a, 5b) réalisé dans le corps de manchon flottant (1).

6. Turbocompresseur à gaz d'échappement selon la revendication 5, **caractérisé en ce que** l'alésage traversant (5a) est un alésage d'alimentation d'huile dont le diamètre est supérieur au diamètre d'alésages d'alimentation d'huile supplémentaires (2) prévus dans le corps de manchon flottant (1).

7. Turbocompresseur à gaz d'échappement selon la revendication 5, **caractérisé en ce que** l'alésage traversant est un alésage traversant (5b) réalisé en plus des alésages d'alimentation d'huile supplémentaires prévus (2) .

8. Turbocompresseur à gaz d'échappement selon l'une quelconque des revendications 1 ou 2, **caractérisé en ce que** le déséquilibre défini du corps de manchon flottant (1) est fourni par une rainure interne (6) réalisée dans le corps de manchon flottant (1).

9. Turbocompresseur à gaz d'échappement selon l'une quelconque des revendications 1 ou 2, **caractérisé en ce que** le déséquilibre défini du corps de manchon flottant (1) est fourni par une déformation (7) de l'enveloppe extérieure du corps de manchon flottant (1).

10. Turbocompresseur à gaz d'échappement selon la revendication 9, **caractérisé en ce que** la déformation (7) est réalisée par un enlèvement de matière au niveau de l'enveloppe extérieure du corps de manchon flottant (1).

11. Turbocompresseur à gaz d'échappement selon l'une quelconque des revendications 1 ou 2, **caractérisé en ce que** le déséquilibre défini du corps de manchon flottant (1) est fourni par un agencement excentrique du diamètre intérieur (D_{I}) du corps de manchon flottant (1) par rapport au diamètre extérieur (D_{A}) du corps de manchon flottant (1).
